(19) Europäisches Patentamt
European Patent Office
Office européen des brevets

(11) **EP 3 933 483 B1**

(12) **FASCICULE DE BREVET EUROPEEN**

(45) Date de publication et mention
de la délivrance du brevet:
**14.12.2022 Bulletin 2022/50**

(51) Classification Internationale des Brevets (IPC):
**G02B 26/06** (2006.01)   **G02B 26/10** (2006.01)
**G02B 27/00** (2006.01)

(21) Numéro de dépôt: **21179932.5**

(22) Date de dépôt: **17.06.2021**

(52) Classification Coopérative des Brevets (CPC):
**G02B 26/06; G02B 26/101; G02B 26/103;
G02B 26/106; G02B 27/0087**

(54) **SCANNER OPTIQUE**

OPTISCHER SCANNER

OPTICAL SCANNER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.07.2020 FR 2006925**

(43) Date de publication de la demande:
**05.01.2022 Bulletin 2022/01**

(73) Titulaire: **Commissariat à l'énergie atomique
et aux énergies alternatives
75015 Paris (FR)**

(72) Inventeurs:
• **MOLLARD, Laurent
38054 GRENOBLE CEDEX 09 (FR)**
• **DIEPPEDALE, Christel
38054 GRENOBLE CEDEX 09 (FR)**
• **FANGET, Stéphane
38054 GRENOBLE CEDEX 09 (FR)**
• **FOWLER, Daivid
38054 GRENOBLE CEDEX 09 (FR)**

(74) Mandataire: **Brevalex
95, rue d'Amsterdam
75378 Paris Cedex 8 (FR)**

(56) Documents cités:
**WO-A1-2018/222727     FR-A1- 2 923 092**

• **HOLMSTROM SVEN T S ET AL: "MEMS Laser
Scanners: A Review", JOURNAL OF
MICROELECTROMECHANICAL SYSTEMS, IEEE
SERVICE CENTER, US, vol. 23, no. 2, 1 avril 2014
(2014-04-01), pages 259-275, XP011544460, ISSN:
1057-7157, DOI: 10.1109/JMEMS.2013.2295470
[extrait le 2014-03-31]**

## Description

## DOMAINE TECHNIQUE

La présente invention se rapporte au domaine des microsystèmes opto-électromécaniques (« MOEMS » selon la terminologie Anglo-Saxonne). En particulier, la présente invention concerne un scanner optique pourvu d'une pluralité de scanners élémentaires agencés pour balayer l'espace environnant du scanner optique au moyen d'une pluralité de faisceaux lumineux.

A cet égard, chaque scanner élémentaire selon la présente invention combine une poutre pourvue d'une partie mobile à laquelle une flexion peut être imposée, et un réseau à commande de phase. En particulier, au moins une poutre parmi l'ensemble des poutres des scanners élémentaires présente une flèche différente de celle des autres poutres de manière à étendre la surface susceptible d'être balayée par l'ensemble des faisceaux lumineux extraits du scanner.

## ÉTAT DE LA TECHNIQUE ANTÉRIEURE

Les scanners ou les micro-scanners 2D sont des dispositifs permettant de balayer avec un faisceau lumineux une scène selon une voire deux dimensions. Ces scanners peuvent notamment être mis en œuvre dans des dispositifs de type LIDAR (« Light Détection And Ranging systems ») à des fins de détection ou d'imagerie.

En pratique le balayage d'une surface ou d'un objet par un faisceau lumineux peut être réalisé au moyen d'un ou plusieurs micro-miroirs mobiles.

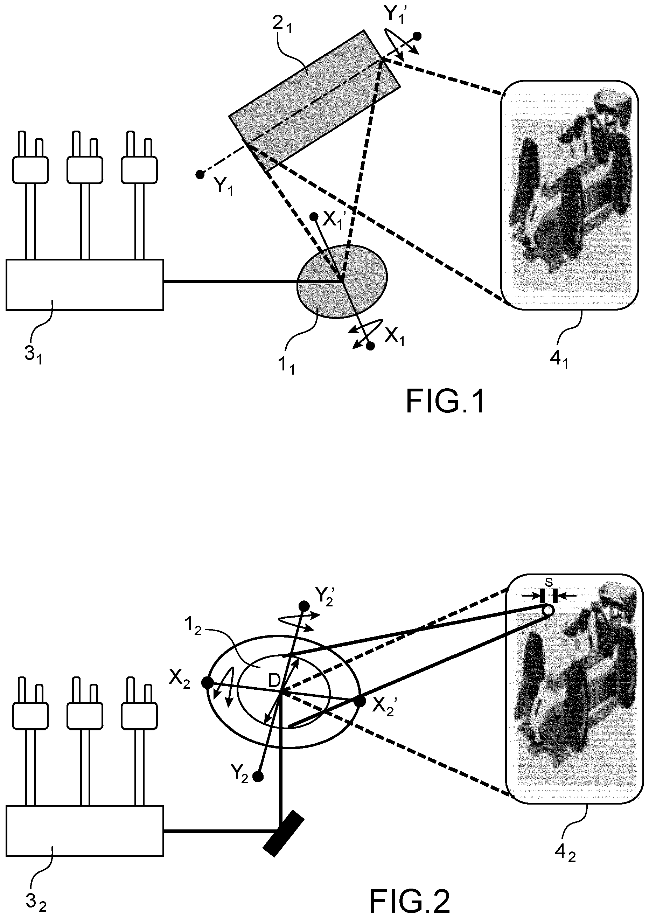

A cet égard, la figure 1 (extraite du document [1] cité à la fin de la description) illustre une première architecture possible d'un tel dispositif pourvu de deux micro-miroirs, dits respectivement premier micro-miroir $1_1$ et deuxième micro-miroir $2_1$, agencés pour pivoter autour, respectivement, d'un premier axe pivot $X_1X_1'$ et d'un deuxième axe pivot $Y_1Y_1'$ non parallèles. En particulier, ces deux micro-miroirs $1_1$ et $2_1$ sont agencés de sorte qu'un faisceau lumineux émis par une source lumineuse $3_1$ soit réfléchi par le premier micro-miroir $1_1$ en direction du deuxième micro-miroir $2_1$ qui le réfléchit à son tour en direction par exemple d'un écran $4_1$. La rotation de chacun des micro-miroirs $1_1$ et $2_1$ autour de leur axe pivot respectif permet ainsi d'effectuer un balayage d'une surface avec le faisceau lumineux par exemple à des fins d'imagerie ou de détection.

Une telle architecture n'est cependant pas satisfaisante.

En effet, cette dernière, du fait de la présence de deux micro-miroirs, est peu compacte.

Par ailleurs, cette architecture requiert un alignement précis des deux micro-miroirs et est par voie de conséquence difficile à réaliser.

Enfin, les micro-miroirs sont également susceptibles de subir un endommagement, notamment par un échauffement induit par le faisceau lumineux.

Afin de pallier en partie ces problèmes, une deuxième architecture, illustrée à la figure 2 (extraite du document [1] cité à la fin de la description), peut être envisagée. Cette dernière met en œuvre un unique micro-miroir $1_2$ monté pivotant autour de deux axes pivot $X_2X_2'$ et $Y_2Y_2'$ non parallèles. L'oscillation de ce micro-miroir $1_2$ autour de l'un et l'autre des deux axes pivots $X_2X_2'$ et $Y_2Y_2'$ permet ainsi de balayer la surface d'un écran $4_1$ au moyen d'un faisceau lumineux issue d'une source lumineuse $3_2$ et réfléchie par ledit micro-miroir $1_2$.

Toutefois, cette deuxième architecture n'est pas non plus satisfaisante.

En effet, à l'instar de la première architecture, le micro-miroir $1_2$ est également susceptible de subir un échauffement induit par le faisceau lumineux.

Par ailleurs, cette deuxième architecture est également sensible à l'alignement de la source lumineuse $3_2$ et du micro-miroir $1_2$. L'alignement entre ces deux éléments est notamment sensible aux chocs subits par le dispositif mais également aux conditions de température et de pression imposées à ce dernier.

En outre, les oscillations du micro-miroir autour de l'un et l'autre des deux axes pivots $X_2X_2'$ et $Y_2Y_2'$, induites par un actionneur, ne sont jamais découplées de sorte que des diaphonies (« Crosstalk » selon la terminologie Anglo-Saxonne) mécaniques sont susceptibles d'intervenir.

De manière alternative aux architectures présentées ci-avant, des micro-scanners 2D à émetteur optique à commande de phase ou à réseau optique à commande de phase (« OPA » ou « Optical Phased Array » selon la terminologie Anglo-Saxonne) ont pu être proposés.

Ces derniers peuvent comprendre une pluralité de sources optiques susceptibles d'émettre chacune un rayonnement lumineux. Chacune de ses sources optiques est par ailleurs associée à des moyens de modulation de phase destinés à déphaser les rayonnements optiques les uns par rapport aux autres de manière à faire varier l'angle de propagation du rayonnement combiné issu de l'ensemble des sources optiques. Selon une configuration avantageuse, les sources optiques peuvent être issues d'une même source principale.

Ce principe de fonctionnement peut être extrapolé à une matrice 2D de sources optiques permettant un balayage d'un faisceau optique suivant deux directions différentes, par exemple perpendiculaires l'une par rapport à l'autre.

Toutefois, ces dispositifs ne sont pas non plus satisfaisants.

En effet, l'espace effectivement balayé par le faisceau lumineux reste relativement limité. Le document WO2018/222727 divulgue un scanner optique comprenant une poutre actionnable en flexion et en torsion.

Par conséquent, un but de la présente invention est de proposer un dispositif de balayage lumineux qui permet de balayer un espace plus important que les dispositifs connus de l'état de la technique.

Un autre but de la présente invention est de proposer un dispositif de balayage lumineux qui présente une compacité appréciable.

Un autre but de la présente invention est de proposer un dispositif de balayage lumineux plus simple à fabriquer.

## EXPOSÉ DE L'INVENTION

Les buts de l'invention sont, au moins en partie, atteints par un scanner optique qui comprend :

-   un support présentant une première face plane ;
-   au moins une source optique apte à émettre un faisceau optique principal d'une longueur d'onde λ ;
-   une pluralité de scanners élémentaires qui comprennent chacun :
-   une poutre qui comprend une partie mobile et une partie fixe, ladite partie fixe reposant sur la première face ;
-   une pluralité de guides d'ondes disposés sur ou dans la partie mobile et destinés à diviser le faisceau optique principal en une pluralité de faisceaux optiques secondaires ;
-   un réseau optique à commande de phase qui comprend une pluralité de déphaseurs optiques chacun couplé à un guide d'onde, disposés sur ou dans une section d'émission de la partie mobile et qui s'étend à partir d'une extrémité libre de la poutre opposée à une extrémité fixe ;

La partie mobile d'au moins une des poutres, présente, au repos, une flèche différente des flèches au repos des parties mobiles des autres poutres.

Selon un mode de mise en œuvre, les parties mobiles de chacune des poutres présentent toute, au repos, une flèche différente.

Selon un mode de mise en œuvre, chaque poutre comprend d'une première face vers une deuxième face parallèle à la première face, une première couche, une deuxième couche et une troisième couche, la flèche de la partie mobile de chacune des poutres étant imposée par un niveau de contraintes internes de l'une et/ou l'autre de la première couche et de la troisième couche, avantageusement le niveau de contrainte de l'une et/ou de l'autre de la première couche et de la troisième couche est fonction de l'épaisseur de la couche concernée.

Selon un mode de mise en œuvre, la première couche et la troisième couche comprennent chacune un matériau diélectrique, avantageusement, le matériau diélectrique comprend du dioxyde de silicium.

Selon un mode de mise en œuvre, chaque déphaseur optique comprend un réseau de diffraction couplé à des moyens de déphasage destinés à imposer un déphasage au faisceau optique secondaire issu du guide d'onde auquel est optiquement couplé le déphaseur optique considéré.

Selon un mode de mise en œuvre, les guides d'onde et/ou les réseaux de diffraction comprennent du nitrure de silicium.

Selon un mode de mise en œuvre, pour chacune des poutres, les déphaseurs optiques sont agencés en lignes parallèlement ou perpendiculairement à un axe d'élongation XX' défini par l'extrémité fixe et l'extrémité libre.

Selon un mode de mise en œuvre, les déphaseurs optiques sont agencés de manière matricielle.

Selon un mode de mise en œuvre, chaque scanner élémentaire est également pourvu d'un actionneur agencé pour imposer une flexion à la partie mobile de la poutre considérée.

Selon un mode de mise en œuvre, l'actionneur comprend au moins un des moyens choisis parmi : des moyens électrostatiques, des moyens magnétiques, des moyens piézoélectriques, des moyens thermiques.

L'invention n'est toutefois pas limitée à ces seuls moyens.

Selon un mode de mise en œuvre, le support est de forme parallélépipédique ou cylindrique ou autre L'invention n'est pas limitée à ces seules formes. En particulier, le support peut prendre d'autres formes régulières ou non, par exemple pyramidales.

## BRÈVE DESCRIPTION DES DESSINS

D'autres caractéristiques et avantages apparaîtront dans la description qui va suivre d'un scanner optique selon l'invention, donnés à titre d'exemples non limitatifs, en référence aux dessins annexés dans lesquels :

La figure 1 illustre une première architecture d'un dispositif de balayage lumineux connu de l'état de la technique, le dispositif comprend notamment deux micro-miroirs montés pivotant chacun autour d'un axe pivot différent et non parallèles ;

La figure 2 illustre une deuxième architecture d'un dispositif de balayage lumineux connu de l'état de la technique, le dispositif comprend notamment un micro-miroir monté pivotant autour de deux axes pivot différents et non parallèles ;

Les figures 3a et 3b sont des représentations schématiques d'un exemple de mise en œuvre d'un scanner selon la présente invention, respectivement, en vue de dessus et en vue de profil ;

La figure 4 est une représentation schématique d'un scanner élémentaire selon un plan de coupe perpendiculaire à la première face et comprenant l'axe d'élongation XX' selon la présente invention ;

La figure 5 est une représentation partielle d'un scanner optique selon une vue à l'aplomb de la première face et illustrant un agencement des guides d'onde susceptible d'être mis en œuvre dans le cadre de la présente invention ;

La figure 6 est une illustration d'un déphaseur optique selon une première architecture susceptible d'être mis en œuvre dans le cadre de la présente invention ;

La figure 7 est une illustration d'un déphaseur optique (issu du document [4] cité à la fin de la description) selon une deuxième architecture susceptible d'être mis en œuvre dans le cadre de la présente invention ;

La figure 8 est une représentation partielle d'un scanner optique selon une vue à l'aplomb de la première face et illustrant un agencement des réseaux de diffraction selon une deuxième variante de la présente invention ;

La figure 9 est une représentation partielle d'un scanner optique selon une vue à l'aplomb de la première face et illustrant un agencement des réseaux de diffraction selon une troisième variante de la présente invention ;

Les figures 10a, 10b sont des représentations schématiques d'un autre exemple de mise en œuvre d'un scanner selon la présente invention en vue dessus, la figure 10a et la figure 10b représentent notamment chacun un scanner optique pourvu d'un support de forme, respectivement, parallélépipédique et cylindrique.

## EXPOSÉ DÉTAILLÉ DE MODES DE RÉALISATION PARTICULIERS

La présente invention concerne un scanner pourvu d'une pluralité de scanners élémentaires chacun susceptible de balayer une surface différente au moyen d'un faisceau lumineux.

A cet égard, chaque scanner élémentaire comprend une poutre, par exemple une poutre vibrante, sur ou dans laquelle est formé un réseau à commande de phase destiné à extraire au niveau d'une face de la poutre un faisceau lumineux susceptible d'être émis par une source lumineuse. Selon la présente invention, au moins une poutre d'un des scanners élémentaires, dit premier scanner, présente, au repos, une flèche différente de celle des poutres des autres scanners élémentaires. Cet agencement permet au premier scanner de balayer une surface, dite première surface, différente de celle balayée par les autres scanners élémentaires.

En d'autres termes, le scanner optique selon la présente invention permet de couvrir une surface relativement importante tout en conservant une compacité appréciable.

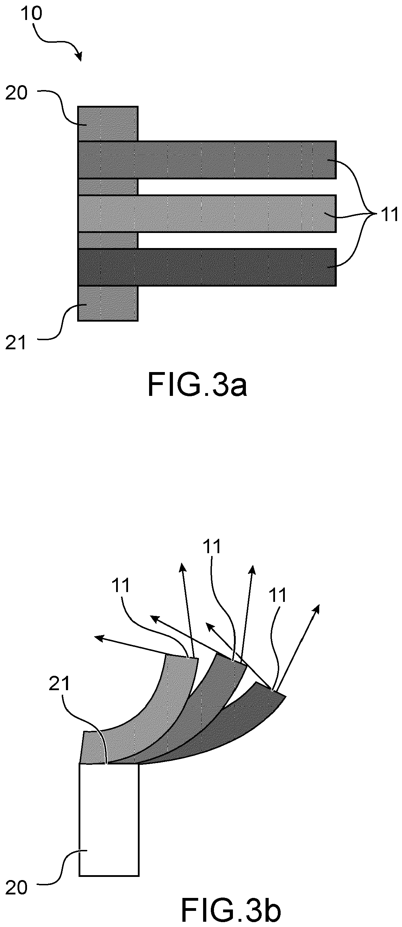

Ainsi les figures 3a et 3b sont des représentations schématiques d'un exemple de mise en œuvre d'un scanner 10 selon la présente invention.

Le scanner 10 comprend notamment un support 20 fixe pourvu d'une face principale 21. Le support 20 peut notamment être obtenu à partir d'un substrat semi-conducteur, par exemple du silicium.

L'invention n'est cependant pas limitée à cette seule mise en œuvre, et ledit support 20 peut comprendre tout autre matériau susceptible d'assurer la fonction de support.

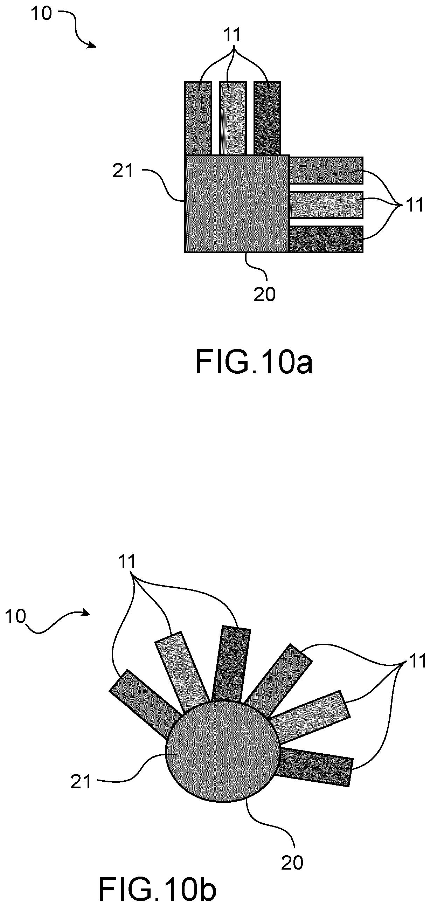

Le support 20 peut être de forme parallélépipédique ou cylindrique, sans toutefois limiter l'invention à ces seules formes (figures 10a et 10b).

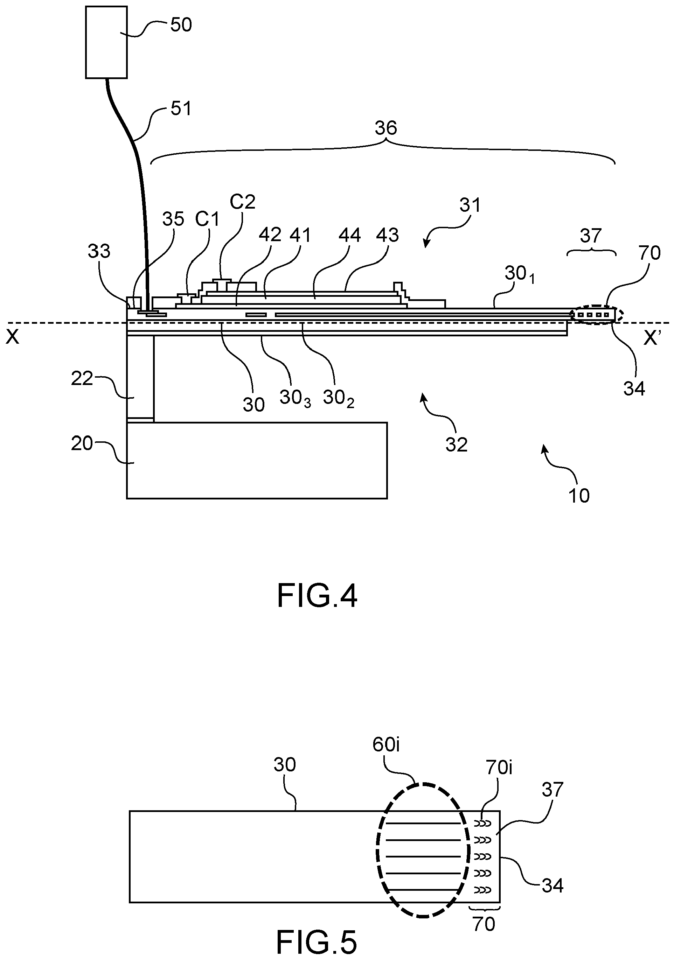

Le scanner 10 comprend également au moins une source optique, par exemple une unique source 50, apte à émettre un faisceau optique principal d'une longueur d'onde λ (figure 4).

Le faisceau optique principal est avantageusement quasimonochromatique, voire monochromatique. La source optique 50 peut par exemple comprendre une source LASER.

La longueur d'onde λ peut être comprise entre 400 nm et 2500 nm, par exemple être égale à 905 nm, ou égale à 1330 nm ou encore égale à 1550 nm.

Le scanner 10 comprend également une pluralité de scanners élémentaires 11, par exemple au nombre de trois sur les figures 3a et 3b.

Tel que représenté à la figure 4, un scanner élémentaire 11 comprend une poutre 30 pourvue d'une première face 31 et d'une deuxième face 32, et qui s'étend, selon un axe d'élongation XX' d'une extrémité fixe 33 vers une extrémité libre 34.

Par « poutre », on entend un élément mécanique solide de forme généralement allongée. A titre s'exemple, une poutre selon les termes de la présente invention peut être de forme parallélépipédique.

L'axe d'élongation XX', au sens de la présente invention, n'est pas nécessairement linéaire et peut par voie de conséquence présenter une courbure (et donc une flèche). Cet aspect est décrit plus en détails dans la suite de la présente description.

La poutre 30 comprend, par ailleurs, une partie mobile 36 qui s'étend de l'extrémité libre 34 vers l'extrémité fixe 33. La poutre 30 peut également comprendre une partie fixe 35, dans le prolongement de la partie mobile et en direction de l'extrémité fixe 33. La poutre 30 est notamment solidaire du support 20 par sa partie fixe 35. En particulier, la partie fixe 35 repose sur la face principale 21.

Par « partie mobile », on entend une partie de poutre susceptible de subir une déformation par flexion et/ou par torsion. Par exemple, la partie mobile peut subir une flexion selon une direction perpendiculaire à la première face et/ou une torsion autour d'un axe d'élongation XX' défini par l'extrémité fixe et l'extrémité libre.

La poutre 30 peut présenter une épaisseur comprise entre 1 $\mu$m et plusieurs centaines de $\mu$, une longueur comprise entre 100 $\mu$m et plusieurs millimètres, et une largeur comprise entre 10$\mu$m et plusieurs millimètres.

L'épaisseur de la poutre est définie comme la distance séparant la première face et la deuxième face. La longueur de la poutre est sa dimension mesurée selon la direction définie par l'axe d'élongation XX' tandis que que sa largeur est sa dimension mesurée selon une direction perpendiculaire à celle définie par l'axe d'élongation XX' et l'épaisseur de ladite poutre.

Chaque scanner élémentaire 11 comprend également une pluralité de guides d'onde 60i disposés sur ou dans la poutre 30 et destinés à diviser le faisceau optique principal en une pluralité de faisceaux optiques secondaires. La figure 5 illustre à cet égard un agencement possible des guides d'onde 60i selon une vue à l'aplomb de la première face 31. Ces guides d'ondes sont, selon cet exemple, disposés parallèlement à l'axe d'élongation XX', et de sorte que le rapport entre leur espacement (en μm) et la longueur d'onde λ (en nm) soit compris entre 0,5 et 10.

Les guides d'ondes peuvent par exemple être d'une longueur comprise entre une centaine de microns et une dizaine de millimètres, et être espacés les uns des autres d'une distance comprise entre une centaine de microns et une dizaine de millimètres.

L'exemple illustré à la figure 5 n'a pas vocation à limiter la présente invention à ce seul agencement, et il apparaîtra clairement dans la suite de l'énoncé que d'autres agencements et/ou géométries peuvent être considérés.

Le faisceau optique principal émis par la source optique 50 est avantageusement transmis au niveau des poutres 30 par des moyens de couplage optique 51, par exemple par une ou plusieurs fibres optiques (figure 4).

Chaque scanner élémentaire 11 comprend également un réseau optique à commande de phase 70 qui comprend une pluralité de déphaseurs optiques.

Le réseau à commande de phase 70 peut être piloté par des moyens de commande.

Le réseau optique à commande de phase 70 comprend une pluralité de déphaseurs optiques 71i chacun couplé à un guide d'onde 60i.

Les déphaseurs optiques 71i sont par ailleurs disposés sur ou dans une section d'émission 37 de la partie mobile 36 et qui s'étend à partir de l'extrémité libre 34.

Selon la présente invention, chaque déphaseur optique 70i peut comprendre un réseau de diffraction 71i couplé à des moyens de déphasage 72i.

En particulier, chaque moyen de déphasage 72i est destiné à imposer un déphasage au faisceau optique secondaire issu du guide d'onde 60i auquel est optiquement couplé le déphaseur optique considéré 70i.

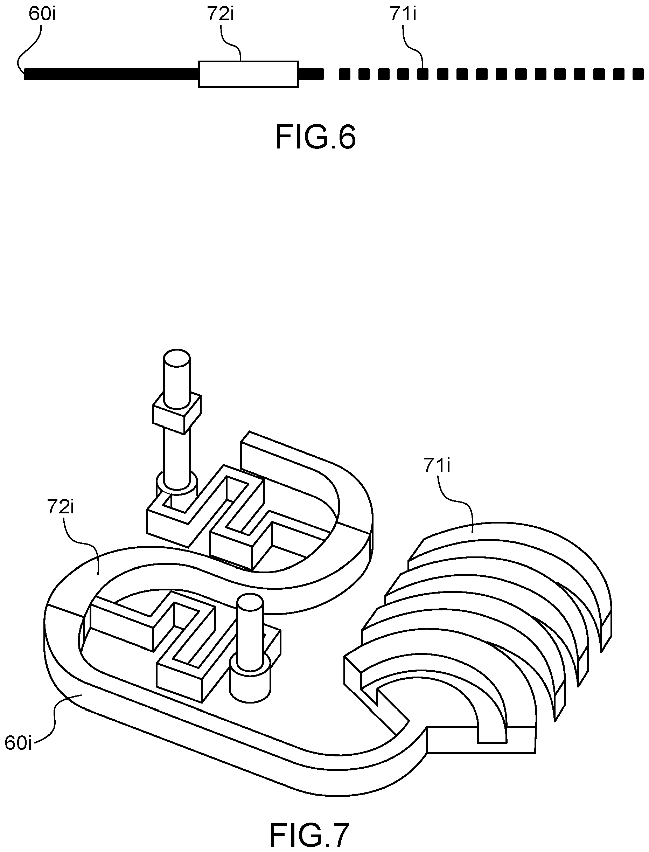

La figure 6 est une illustration d'un déphaseur optique 70i selon une première architecture susceptible d'être mise en œuvre dans le cadre de la présente invention. En particulier, le réseau de diffraction 71i est formé de plots alignés dans le prolongement du guide d'onde 60i, tandis que les moyens de déphasage 72i peuvent comprendre un élément chauffant disposé à l'aplomb du guide d'onde 60i et destinés à chauffer localement ce dernier afin de moduler son indice de réfraction.

La figure 7 est une illustration d'un déphaseur optique 70i selon une deuxième architecture susceptible d'être mise en œuvre dans le cadre de la présente invention. En particulier, le réseau de diffraction 71i est formé d'arcs pleins alignés, tandis que les moyens de déphasage 72i peuvent comprendre un élément chauffant destiné à chauffer localement le guide d'onde 60i afin de moduler son indice de réfraction.

De manière avantageuse, les guides d'onde et/ou les réseaux de diffraction peuvent comprendre du nitrure de silicium.

Selon une première variante, les déphaseurs optiques peuvent être agencés en ligne perpendiculairement à un axe d'élongation XX' défini par l'extrémité fixe et l'extrémité libre (figure 5).

En fonctionnement, un tel scanner élémentaire 11, le faisceau optique principal émis par la source optique est dans un premier temps divisé en une pluralité de faisceaux optiques secondaires guidés par la pluralité de guides d'onde 60i. Chaque faisceau optique secondaire guidé par un guide d'onde donné est ensuite extrait de la poutre au moyen du réseau de diffraction 71i auquel est associé le guide d'onde considéré. L'ensemble des faisceaux optiques secondaires ainsi extraits d'une même poutre se recombinent pour former un faisceau dit faisceau élémentaire. Un déphasage entre les faisceaux optiques d'une même poutre induit par les moyens de déphasage 72i permet de faire varier l'angle de propagation du faisceau élémentaire. Cet angle de propagation varie notamment dans un plan normal à la première face et qui comprend la direction d'alignement des déphaseurs optiques.

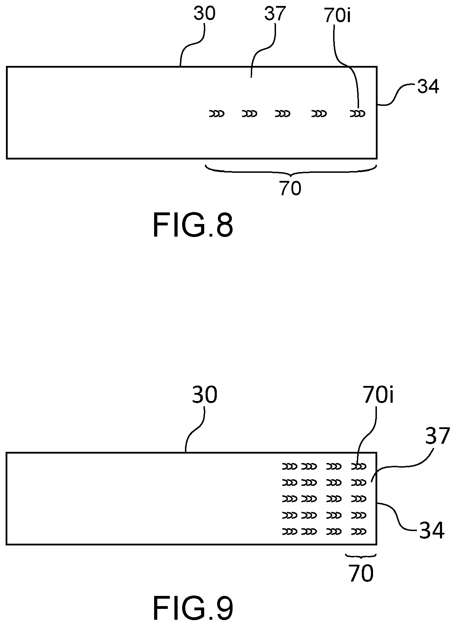

Selon une deuxième variante illustrée à la figure 8, les déphaseurs optiques 70i peuvent être agencés en lignes parallèlement l'axe d'élongation XX'.

Selon une troisième variante illustrée à la figure 9, les déphaseurs optiques 70i peuvent être agencés de manière matricielle.

Par « agencé de manière matricielle », on entend agencés selon N lignes et M colonnes. Selon cette troisième variante, un scanner élémentaire peut ainsi balayer l'espace selon deux angles de propagation.

De manière particulièrement avantageuse, la partie mobile d'au moins une des poutres, présente, au repos, une flèche différente des flèches au repos des parties mobiles des autres poutres.

Par « flèche », on entend une déformation ou une déflexion de la partie mobile de la poutre par rapport à un axe d'élongation rectiligne. La flèche peut être caractérisée par un angle de déflexion au repos.

Une flèche au repos correspond à une déformation intrinsèque de la partie mobile. En d'autres termes cette déformation de la partie mobile ne résulte pas d'une action extérieure ou de l'application d'une contrainte particulière au niveau de ladite partie mobile.

Plus particulièrement, la flèche au repos de la partie mobile dépend des contraintes internes des matériaux constitutifs de la poutre. A cet égard, les documents [2] et [3] cités à la fin de la description concernent l'effet de telles contraintes sur la flèche au repos de la poutre.

Ainsi, une couche présentant une contrainte en tension (et inversement compression) disposée entre la fibre neutre de la poutre et sa deuxième face va entrainer une flexion de ladite poutre selon une direction normale à ladite deuxième face (inversement selon une direction opposée à la direction normale à la deuxième face).

De manière équivalente, une couche présentant une contrainte en tension (et inversement compression) disposée entre la fibre neutre de la poutre et sa première face va entrainer une flexion de ladite poutre selon une direction normale à ladite première face (inversement selon une direction opposée à la direction normale à la première face).

Les propriétés (et notamment leurs contraintes internes et/ou leurs épaisseurs) des couches constitutives de la poutre gouvernent ainsi la flexion au repos, (ainsi que son amplitude) de la poutre.

La différence de flèche entre parties mobiles permet à chaque scanner élémentaire de balayer, avec le faisceau élémentaire qui lui est associé, une zone ou une surface différente. La surface ainsi couverte par le scanner optique 10 selon la présente invention est accrue au regard des scanners optiques connus de l'état de la technique.

La compacité d'un tel scanner reste par ailleurs.

Selon un mode de mise en œuvre particulièrement avantageux, la flèche au repos de la partie mobile peut résulter d'une contrainte interne induite par la structure même de la poutre.

À cet égard, la poutre 30 d'un scanner élémentaire 11 peut comprendre, de sa première face 31 vers sa deuxième face 32, une première couche, une deuxième couche et une troisième couche. Selon cette configuration, la flèche de la partie mobile de chacune des poutres est imposée par un niveau contrainte de l'une et/ou l'autre de la première couche $30_1$ et de la troisième couche $30_3$. Plus particulièrement, le niveau de contrainte de l'une et/ou de l'autre de la première couche $30_1$ et de la troisième couche $30_3$ est fonction de l'épaisseur de la couche concernée.

La première couche $30_1$ et la troisième couche $30_3$ peuvent avantageusement comprendre un matériau diélectrique et plus particulièrement du dioxyde de silicium.

La deuxième couche $30_2$ peut comprendre un matériau semi-conducteur, avantageusement du silicium, et encore plus avantageusement du silicium poly cristallin.

De manière équivalente, il est observé une diminution de la déflexion au repos à mesure que l'épaisseur E1 croit.

Ainsi, il est possible d'imposer de manière simple la flèche d'une poutre par simple ajustement de l'une et/ou l'autre de la première et de la deuxième épaisseur.

En pratique, une première couche faite $SiO_2$ présentant une contrainte en compression de l'ordre de 200 MPa et un module de Young de 70 GPA entrainera une flexion selon une direction normale à la première face. Cette flexion est d'autant plus importante que l'épaisseur de ladite couche est élevée.

De manière équivalente, une troisième couche faite de TEOS présentant une contrainte en compression de l'ordre de 80 MPa et un module de Young de 70 GPa, entrainera une flexion selon une direction normale à la deuxième face. Cette flexion est d'autant plus importante que l'épaisseur de ladite couche est élevée.

La considération selon la présente invention d'une poutre présentant une flèche au repos différente d'un scanner élémentaire à l'autre permet à chacun de ces derniers de balayer une surface, dite surface élémentaire, différente. Les surfaces élémentaires combinées entre elles forment alors la surface totale susceptible d'être balayée par le scanner optique 10. Cette surface totale peut être notamment modulée en fonction du nombre de scanners élémentaires et de leur agencement par rapport au support 20.

À cet égard, la figure 10a représente un premier agencement possible des scanners élémentaires sur un support 20 de forme parallélépipédique. Selon ce premier agencement, une première pluralité de scanners élémentaires 11 (au nombre de trois) s'étend à partir d'un côté de la face principale 21, tandis qu'une deuxième pluralité de scanners élémentaires 11 (au nombre de trois) s'étend à partir d'un autre côté de la face principale.

La figure 10b illustre un autre agencement possible. Selon cet agencement, le support est de forme cylindrique, et les scanners élémentaires 11 s'étendent de manière essentiellement radiale.

De manière particulièrement avantageuse, chaque scanner élémentaire 11 est également pourvu d'un actionneur 40 agencé pour imposer une flexion à la partie mobile de la poutre considérée.

L'actionneur 40 peut être commandé par les moyens de commande, par exemple des moyens de commande électronique, notamment équipés d'un microprocesseur ou d'un calculateur. Ces moyens de commande peuvent notamment être adaptés pour faire vibrer la poutre en flexion. Ces moyens de commande peuvent en particulier imposer une vibration à la poutre en flexion ou en torsion. Cette vibration peut notamment présenter une fréquence égale à la fréquence de résonance de la poutre de manière à bénéficier du facteur de qualité mécanique. Un fonctionnement à la fréquence de résonance permet également d'amplifier le mouvement de la poutre.

À cet égard, la fréquence de résonance d'une poutre de longueur L, de largueur b, d'épaisseur h et de densité p et de module d'Young E suit à la relation suivante :

$$\left(\frac{E}{\rho}\right)^{1/2} \frac{h}{L^2}$$

Ainsi, la fréquence de résonance augmente avec l'épaisseur et diminue lorsque sa longueur augmente. Cette diminution en fonction de l'épaisseur suit néanmoins une loi au carré et est donc plus marquée lorsqu'il s'agit de modifier la longueur.

En d'autres termes, la fréquence de résonance de la poutre peut être ajustée par son épaisseur et sa longueur.

Une « flexion » de la poutre correspond ici à une déformation de cette dernière selon un plan perpendiculaire à la première face 31. Cette flexion imposée par l'actionneur 40 vient se cumuler à la flèche au repos de la poutre.

L'actionneur 40 peut par exemple comprendre des moyens choisis parmi : des moyens des électrostatiques, des moyens magnétiques, des moyens piézoélectriques, des moyens thermiques. L'invention n'est toutefois pas limitée à ces seuls moyens.

L'actionneur 40 peut être disposé au moins en partie sur la partie mobile 36. Plus particulièrement, l'actionneur 40 peut recouvrir partiellement la partie mobile 36 et la partie fixe 35 au niveau de la première face.

L'exemple représenté à la figure 4 met en œuvre un actionneur 40 piézoélectrique. En particulier, dans cet exemple, l'actionneur 40 comprend une couche de matériau piézoélectrique 41 intercalée entre deux électrodes 42 et 43 destinées à imposer une tension électrique non-nulle de part et d'autre de ladite couche de matériau piézoélectrique 41. A cet égard, l'actionneur 40 peut être pourvu de contacts C1 et C2 au niveau desquels une tension d'alimentation des électrodes peut être appliquée. Cette tension d'alimentation peut notamment être appliquée avec les moyens de commande. Sous l'action de cette tension électrique, la couche de matériau piézoélectrique contracte selon un plan perpendiculaire à la première face 31, et entraîne en flexion la partie mobile 36 de la poutre 30.

A cet égard, et tel que précisé dans le document [2] cité à la fin de la description, plus le champ de polarisation électrique imposé à la couche de matériau piézoélectrique (par exemple un couche de PZT) est élevé, plus la flexion de l'ensemble formé par ladite couche et la poutre est importante. Cette flexion est dépendante non seulement des propriétés mécaniques et géométrique de la poutre mais également du champ de polarisation électrique imposé à la couche de matériau piézoélectrique.

La direction de fléchissement de la couche de matériau piézoélectrique peut dépendre du signe de la tension électrique imposée par les électrodes, notamment lorsque ladite couche comprend un matériau piézoélectrique non ferroélectrique.

L'amplitude de fléchissement, quant à elle, peut dépendre de nombreux paramètres parmi lesquelles on peut citer : la raideur de la poutre, l'amplitude de la tension imposée par les électrodes, l'épaisseur de la couche de matériau piézoélectrique.

Plus particulièrement, l'amplitude de fléchissement d'une poutre, pour une charge donnée, est directement proportionnelle à la puissance quatre de sa longueur et inversement proportionnelle au produit de son épaisseur par son moment d'inertie.

En d'autres termes, l'amplitude de fléchissement d'une poutre croit avec sa longueur et/ou lorsque son épaisseur diminue.

Ainsi, et eu égard à ce qui précède, l'amplitude de fléchissement dépend des paramètres mécaniques et géométriques de la poutre, mais est également fonction du champ de polarisation imposé par les électrodes.

La poutre peut également présenter une flexion initiale qui exerce une influence sur l'amplitude de flexion de cette dernière.

De manière avantageuse, il est possible de faire vibrer la poutre, et plus particulièrement à sa fréquence de résonnance afin de conférer au scanner un meilleur facteur de qualité.

La couche de matériau piézoélectrique peut comprendre au moins l'un des matériaux choisis parmi : PZT (Titano-Zirconate de Plomb) ou AIN (nitrure d'aluminium). D'autres matériaux piézoélectriques sont envisageables.

L'emploi d'un actionneur au niveau de chacune des poutres permet d'imposer également une direction de balayage, par exemple autre ou identique à celle associé au réseau optique à commande de phase.

Selon un autre aspect de la présente invention, la section d'émission 37 présente une transparence adaptée pour permettre une extraction lumineuse à partir de la première face et de la deuxième face. En d'autres termes, le faisceau optique principal peut être extrait sous la forme d'un premier faisceau au niveau de la première face et d'un deuxième faisceau au niveau de la deuxième face.

Par ailleurs, toujours selon cet aspect, la section d'émission 37 comprend uniquement la première couche $30_1$ (figure 4). Ainsi, le deuxième faisceau susceptible d'être extrait au niveau de la deuxième face 32 n'est plus écranté/absorbé par la deuxième couche $30_2$ et la troisième couche $30_3$. Cet agencement permet de mettre en œuvre une deuxième couche faite de silicium et de considérer faisceau optique principal d'une longueur d'onde $\lambda$ égale à 905 nm.

Ainsi, le scanner optique selon la présente invention permet de balayer une surface d'une étendue plus importante que les scanners connus de l'état de la technique tout en conférant à ce dernier une compacité appréciable au regard des dispositifs faits de micro-miroirs.

Par ailleurs, ce scanner optique, qui ne met pas en œuvre de micro-miroirs, ne nécessite pas d'alignement et reste simple à mettre en œuvre.

Le scanner 10 selon la présente invention peut avantageusement être mis en œuvre dans un projecteur d'images de taille réduite (par exemple un pico-projecteur) dans un équipement électronique mobile, et plus particulièrement, un téléphone portable, une montre connectée, dans des équipements de projection intra rétinienne (pour la réalité augmentée).

La scanner peut également être mis en œuvre dans le cadre d'application 3D, et notamment d'imagerie 3D.

Le scanner 10 peut également former la partie active d'un LIDAR, et par exemple être mis en œuvre dans un véhicule autonome.

RÉFÉRENCES

[1] Sven Holmstrom et al., "MEMS laser scanners : a review", Journal of Microelectromechanical Systems . April 2014, DOI: 10.1109/JMEMS.2013.2295470 ;

[2] section 13.5.3 de l'ouvrage « Intégration of Ferroelectric and Piezoelectric Thin Films » de Defay ;

[3] Hsueh et al., « Thermal stress analyses of multilayered films on substrates and cantilever beams for micro sensors and actuators "J. Micromech. Microeng., 16, 2509-2515, 2006 ;

[4] Jie Sun et al., « Large-scale nanophotonic phased array », Nature, 11727, vol 493, 195-199, January 2013.

**Revendications**

1. Scanner optique (10) qui comprend :

   - un support (20) présentant une première face (31) plane ;
   - au moins une source optique (50) apte à émettre un faisceau optique principal d'une longueur d'onde $\lambda$;
   - une pluralité de scanners élémentaires (11) qui comprennent chacun :
   - une poutre (30) qui comprend une partie mobile (36) et une partie fixe, ladite partie fixe reposant sur la première face (31) ;
   - une pluralité de guides d'onde (60i) disposés sur ou dans la partie mobile (36) et destinés à diviser le faisceau optique principal en une pluralité de faisceaux optiques secondaires ;
   - un réseau optique à commande de phase (70) qui comprend une pluralité de déphaseurs optiques (71i) chacun couplé à un guide d'onde, disposés sur ou dans une section d'émission (37) de la partie mobile (36) et qui s'étend à partir d'une extrémité libre (34) de la poutre (30) opposée à une extrémité fixe (33) ; la partie mobile (36) d'au moins une des poutres (30), présente, au repos, une flèche différente des flèches au repos des parties mobiles des autres poutres (30).

2. Scanner optique (10) selon la revendication 1, dans lequel les parties mobiles de chacune des poutres (30) présentent toute, au repos, une flèche différente.

3. Scanner optique (10) selon la revendication 1 ou 2, dans lequel chaque poutre (30) comprend d'une première face (31) vers une deuxième face (32) parallèle à la première face (31), une première couche $(30_1)$, une deuxième couche $(30_2)$ et une troisième couche $(30_3)$, la flèche de la partie mobile (36) de chacune des poutres (30) étant imposée par un niveau contrainte de l'une et/ou l'autre de la première couche $(30_1)$ et de la troisième couche $(30_3)$, avantageusement le niveau de contrainte de l'une et/ou de l'autre de la première couche $(30_1)$ et de la troisième couche $(30_3)$ est fonction de l'épaisseur de la couche concernée.

4. Scanner optique (10) selon la revendication 3, dans lequel la première couche $(30_1)$ et la troisième couche $(30_3)$ comprennent chacune un matériau diélectrique, avantageusement, le matériau diélectrique comprend du dioxyde de silicium.

5. Scanner optique (10) selon l'une des revendications 1 à 4, dans lequel chaque déphaseur optique comprend un réseau de diffraction (71i) couplé à des moyens de déphasage (72i) destinés à imposer un déphasage au faisceau optique secondaire issu du guide d'onde auquel est optiquement couplé le déphaseur optique considéré.

6. Scanner optique (10) selon l'une des revendications 5, dans lequel les guides d'onde (60i) et/ou les réseaux de diffraction comprennent du nitrure de silicium.

7. Scanner optique (10) selon l'une des revendications 1 à 6, dans lequel, pour chacune des poutres (30), les déphaseurs optiques (71i) sont agencés en lignes parallèlement ou perpendiculairement à un axe d'élongation XX' défini par l'extrémité fixe (33) et l'extrémité libre (34).

8. Scanner optique (10) selon l'une des revendications 1 à 6, dans lequel les déphaseurs optiques (71i) sont agencés de manière matricielle.

9. Scanner optique (10) selon l'une des revendications 1 à 8, dans lequel chaque scanner élémentaire est également pourvu d'un actionneur (40) agencé pour imposer une flexion ou une torsion à la partie mobile (36) de la poutre (30) considérée.

10. Scanner optique (10) selon la revendication 9, dans lequel l'actionneur (40) comprend au moins un des moyens choisis parmi : des moyens des électrostatiques, des moyens magnétiques, des moyens piézoélectriques, des moyens thermiques.

11. Scanner optique (10) selon l'une des revendications 1 à 10, dans lequel le support (20) est de forme parallélépipédique ou cylindrique.

**Patentansprüche**

1. Optischer Scanner (10), der umfasst:

    - einen Halter (20), der eine erste ebene Fläche (31) aufweist;
    - wenigstens eine optische Quelle (50), die geeignet ist, einen optischen Hauptstrahl mit einer Wellenlänge $\lambda$ auszusenden;
    - eine Vielzahl von Elementarscannern (11), die jeweils umfassen:
    - einen Balken (30), der einen beweglichen Teil (36) und einen festen Teil umfasst, wobei der feste Teil auf der ersten Fläche (31) aufliegt;
    - eine Vielzahl von Wellenleitern (60i), die auf oder in dem beweglichen Teil (36) angeordnet und dazu bestimmt sind, den optischen Hauptstrahl in eine Vielzahl von optischen Nebenstrahlen aufzuteilen;
    - ein optisches Netzwerk mit Phasensteuerung (70), das eine Vielzahl von optischen Phasenschiebern (71i) umfasst, die jeweils an einen Wellenleiter gekoppelt sind und auf oder in einem Sendeabschnitt (37) des beweglichen Teils (36) angeordnet sind, und das sich ausgehend von einem freien Ende (34) des Balkens (30), das einem festen Ende (33) gegenüberliegt, erstreckt; wobei der bewegliche Teil (36) wenigstens eines der Balken (30) im Ruhezustand einen Durchhang aufweist, der sich von den Durchhängen der beweglichen Teile der anderen Balken (30) im Ruhezustand unterscheidet.

2. Optischer Scanner (10) nach Anspruch 1, wobei die beweglichen Teile jedes der Balken (30) allesamt einen unterschiedlichen Durchhang im Ruhezustand aufweisen.

3. Optischer Scanner (10) nach Anspruch 1 oder 2, wobei jeder Balken (30) von einer ersten Fläche (31) zu einer zweiten Fläche (32), die parallel zu der ersten Fläche (31) verläuft, eine erste Schicht ($30_1$), eine zweite Schicht ($30_2$) und eine dritte Schicht ($30_3$) umfasst, wobei der Durchhang des beweglichen Teils (36) jedes der Balken (30) durch einen Spannungsgrad von der einen und/oder der anderen der ersten Schicht ($30_1$) und der dritten Schicht ($30_3$) auferlegt wird, wobei vorteilhafterweise der Spannungsgrad von der einen und/oder der anderen der ersten Schicht ($30_1$) und der dritten Schicht ($30_3$) von

der Dicke der jeweiligen Schicht abhängig ist.

4. Optischer Scanner (10) nach Anspruch 3, wobei die erste Schicht ($30_1$) und die dritte Schicht ($30_3$) jeweils ein dielektrisches Material umfassen, wobei vorteilhafterweise das dielektrische Material Siliziumdioxid umfasst.

5. Optischer Scanner (10) nach einem der Ansprüche 1 bis 4, wobei jeder optische Phasenschieber ein Beugungsgitter (71i) umfasst, das an Phasenverschiebungsmittel (72i) gekoppelt ist, die dazu bestimmt sind, dem optischen Nebenstrahl, der aus dem Wellenleiter stammt, an welchen der betreffende optische Phasenschieber optisch gekoppelt ist, eine Phasenverschiebung aufzuerlegen.

6. Optischer Scanner (10) nach einem der Ansprüche 5, wobei die Wellenleiter (60i) und/oder die Beugungsgitter Siliziumnitrid umfassen.

7. Optischer Scanner (10) nach einem der Ansprüche 1 bis 6, wobei für jeden der Balken (30) die optischen Phasenschieber (71i) in Linien parallel oder senkrecht zu einer Ausdehnungsachse XX', die durch das feste Ende (33) und das freie Ende (34) definiert wird, angeordnet sind.

8. Optischer Scanner (10) nach einem der Ansprüche 1 bis 6, wobei die optischen Phasenschieber (71i) matrixförmig angeordnet sind.

9. Optischer Scanner (10) nach einem der Ansprüche 1 bis 8, wobei jeder Elementarscanner ebenfalls mit einem Betätigungselement (40) versehen ist, das angeordnet ist, um dem beweglichen Teil (36) des betreffenden Balkens (30) eine Biegung oder eine Verdrehung aufzuerlegen.

10. Optischer Scanner (10) nach Anspruch 9, wobei das Betätigungselement (40) wenigstens eines der Mittel umfasst, die gewählt werden aus: elektrostatischen Mitteln, magnetischen Mitteln, piezoelektrischen Mitteln, thermischen Mitteln.

11. Optischer Scanner (10) nach einem der Ansprüche 1 bis 10, wobei der Halter (20) quaderförmig oder zylindrisch ist.

**Claims**

1. Optical scanner (10) that comprises:

    - a support (20) having a first plane face (31);
    - at least one optical source (50) able to emit a main optical beam with a wavelength $\lambda$;
    - a plurality of elementary scanners (11) that each comprise:

- a beam (30) that comprises a movable part (36) and a fixed part, said fixed part resting on the first face (31);
- a plurality of waveguides (60i) disposed on or in the movable part (36) and intended to divide the main optical beam into a plurality of secondary optical beams;
- a phase-control optical array (70) that comprises a plurality of optical phase shifters (71i) each coupled to a waveguide, disposed on or in an emission section (37) of the movable part (36) and which extends from a free end of the beam opposite to a fixed end (33); the movable part of at least one of the beams has, at rest, a deflection different from the deflections at rest of the movable parts of the other beams (30).

2. Optical scanner (10) according to claim 1, wherein the movable parts of each of the beams (30) all have, at rest, a different deflection.

3. Optical scanner (10) according to claim 1 or 2, wherein each beam (30) comprises, from a first face (31) towards a second face (32) parallel to the first face, a first layer ($30_1$), a second layer ($30_2$) and a third layer ($30_3$), the deflection of movable part (36) of each of the beams being imposed by a stress level of one or other or both of the first layer and of the third layer, advantageously the stress level of one or other or both of the first layer and the third layer is a function of the thickness of the layer concerned.

4. Optical scanner (10) according to claim 3, wherein the first layer ($30_1$) and the third layer ($30_3$) each comprise a dielectric material, advantageously the dielectric material comprises silicon dioxide.

5. Optical scanner (10) according to any of the claims 1 to 4, wherein each optical phase shifter comprises a diffraction grating (71i) coupled to phase-shifting means (72i) intended to impose a phase difference on the secondary optical beam coming from the waveguide to which the optical phase shifter in question is optically coupled.

6. Optical scanner (10) according to claim 5, wherein the waveguides (60i) and/or the diffraction gratings comprise silicon nitride.

7. Optical scanner (10) according to any of the claims 1 to 6, wherein, for each of the beams (30), the optical phase shifters (71i) are arranged in lines parallel or perpendicular to an elongation axis XX' defined by the fixed end (33) and the free end (34).

8. Optical scanner (10) according to any of the claims 1 to 6, wherein the optical phase shifters (71i) are arranged in a matrix.

9. Optical scanner (10) according to any of the claims 1 to 8, wherein each elementary scanner is also provided with an actuator arranged to impose bending or twisting on the movable part of the beam in question.

10. Optical scanner (10) according to claim 9, wherein the actuator (40) comprises at least one of the means chosen from: electrostatic means, magnetic means, piezoelectric means and thermal means.

11. Optical scanner (10) according to any of the claims 1 to 10, wherein the support (20) is parallelepipedal or cylindrical shaped.

FIG.1

FIG.2

FIG.3a

FIG.3b

FIG.4

FIG.5

60i          72i          71i

FIG.6

72i

71i

60i

FIG.7

FIG.8

FIG.9

10

11

21

20

## FIG.10a

11

10

11

11

21

20

## FIG.10b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018222727 A

**Littérature non-brevet citée dans la description**

- **SVEN HOLMSTROM et al.** MEMS laser scanners : a review. *Journal of Microelectromechanical Systems,* Avril 2014
- **DE DEFAY.** section 13.5.3 de l'ouvrage. *Intégration of Ferroelectric and Piezoelectric Thin Films*
- **HSUEH et al.** Thermal stress analyses of multilayered films on substrates and cantilever beams for micro sensors and actuators. *J. Micromech. Microeng.,* 2006, vol. 16, 2509-2515
- **JIE SUN et al.** Large-scale nanophotonic phased array. *Nature,* Janvier 2013, vol. 493, 195-199